(19) **Europäisches Patentamt / European Patent Office / Office européen des brevets**

(11) **EP 1 930 144 B1**

(12) **EUROPEAN PATENT SPECIFICATION**

(45) Date of publication and mention
of the grant of the patent:
**01.02.2012 Bulletin 2012/05**

(51) Int Cl.:
*B29C 31/04* (2006.01)   *B29C 39/24* (2006.01)

(21) Application number: **07122259.0**

(22) Date of filing: **04.12.2007**

(54) **Method for producing polyurethane products, in particular daymarks for buoys**

Verfahren zur Herstellung von Polyurethanprodukten, insbesondere Tagesmarken für Bojen

Procédé de production de produits en polyuréthane, en particulier les marques de jour pour bouées

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.12.2006 NL 2000357**

(43) Date of publication of application:
**11.06.2008 Bulletin 2008/24**

(73) Proprietor: **Herikon B.V.**
**7601PS Almelo (NL)**

(72) Inventor: **Eertman, Bernardus Antonius Augustinius**
**7631 CD Ootmarsum (NL)**

(74) Representative: **Mink-Lindenburg, Charlotte Hildegard**
**Octrooibureau Mink B.V.**
**Twentepoort Oost 61-25**
**7609 RG Almelo (NL)**

(56) References cited:
| | |
|---|---|
| **EP-A1- 0 005 376** | **EP-A1- 0 030 827** |
| **WO-A-00/58153** | **DE-A1- 1 570 251** |
| **DE-A1- 3 030 049** | **DE-A1- 19 727 412** |
| **DE-U1- 20 100 793** | **FR-A- 2 423 316** |
| **GB-A- 1 269 070** | **US-A- 2 842 160** |
| **US-A- 3 886 963** | **US-A- 4 034 708** |
| **US-A- 4 100 010** | **US-A- 4 247 508** |
| **US-A- 4 356 617** | **US-A- 5 928 596** |

- **GARDENA: "Article"[Online] January 2008 (2008-01), XP002489972 Retrieved from the Internet: URL:http://www.gardena.com/ opencms/export/ sites/gardena/DE/de/globals/ Prospekte/PDF/ 01_komfortabel_ bewaessern.pdf> [retrieved on 2008-07-25]**
- **GARDENA: "article"[Online] 2008, XP002489973 Retrieved from the Internet: URL:http: //www.gardena.com/opencms/export/ sites/ gardena/DE/de/globals/Prospekte/PDF/ 02_planungshilfe_sprinklersystem.pdf> [retrieved on 2008-07-25]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 930 144 B1

## Description

The present invention relates to a method for filling a mould with polyurethane for the purpose of manufacturing large, thin-walled polyurethane products, in particular daymarks for buoys.

The plastic polyurethane combines a high strength and rigidity with high elasticity, and is therefore highly suitable as raw material for diverse products.

Polyurethane products are manufactured in practice by heating polyurethane to a desired temperature and moulding the heated polyurethane in a heated mould. The thus moulded product must cure in the mould. The thus created product can then be removed from the mould and, if necessary, subjected to a finishing treatment. These operations take place in the manner which is per se usual for polyurethane in this field.

The present invention relates to the pouring of the heated polyurethane into the mould. This pouring process is generally performed manually using a filling hose. This filling hose is held for this purpose in the mould by an operative and moved through the mould until the mould is filled with the desired amount of polyurethane. Depending on the size of the mould, a plurality of operatives are positioned around the mould who pass the filling hose to each other.

The drawback of the known method is that air bubble formation can occur in the moulded product during filling of the mould. The formation of air bubbles results in visible weak spots in the resulting polyurethane product which detract from the quality thereof. This in turn results in a high rejection percentage representing considerable financial loss.

The invention has for its object to provide a method of the type stated in the preamble which obviates this drawback.

The method according to the invention comprises for this purpose the following steps of:

a) selecting a mould suitable for manufacturing large, thin-walled products;
b) selecting a distributing device, which distributing device comprises a housing provided with a feed for polyurethane and with two or more discharges which are adapted to deliver polyurethane at two or more spatially separated positions, wherein a number of passages are situated in the housing which connect the feed to each of the discharges and wherein the combined outflow area of the discharges is greater than the inflow area of the feed;
c) arranging the distributing device close to the mould;
d) providing each discharge in the distributing device with delivery means, the length of which is adjusted to the filling height of the mould;
e) selecting the two or more spatially separated positions and placing the outer ends of the delivery means at these positions in the mould;

f) feeding polyurethane to the distributing device;
g) delivering the supplied polyurethane substantially below the liquid level of the polyurethane in the mould; and
h) moving the delivery means upward during delivery of the polyurethane for delivering the supplied polyurethane with the delivery means in pressureless manner at the two or more spatially separated positions using the discharges.

With the method according to the invention the polyurethane is poured simultaneously into the mould at a plurality of spatially separated positions, thereby effectively avoiding the formation of air bubbles is so that the quality of the thus moulded products is improved considerably. The method according to the invention moreover has the advantage that the occurrence of colour separation is avoided. Colour separation is an adverse effect which is known in the prior art and occurs in the moulding of coloured polyurethane according to the known method. Advantageously each discharge is provided in step d) with delivery means, the length of which is adjusted to the filling height of the mould in order to deliver the polyurethane close to the bottom. Using this distributing device the polyurethane can be distributed automatically among the discharges and for instance delivered uniformly at the spatially separated positions without additional pressure. Any desired distribution of the supplied polyurethane among the discharges can be achieved in reliable manner through the choice of the dimensions of the passages.

It is noted for the sake of completeness that US-A-4 356 617 describes a method for coating the surface of emblems with a layer of polyurethane. In the known method a nozzle is used with a plurality of thin applicator tubes which are spaced closely together and which apply the layer of polyurethane. Use is made of the known Flow Coating technique, with reference to US 3,875,893, wherein the polyurethane is applied under pressure.

EP -A1-0 030 827, from the same applicant as US-A-4 356 617, describes the method known herefrom for filling a recess, also in the context of manufacturing decorative emblems. The avoidance of air inclusion is mentioned herein, and attributed to the use of the applicator tubes.

These known methods are suitable for applying a thin coating layer to a flat surface and are not intended, nor suitable, for manufacturing large, thin-walled polyurethane products.

In the opinion of applicant it is precisely the application of the polyurethane under pressure which will result in the formation of air bubbles.

According to a first preferred embodiment, step c) of the method further comprises the step of disposing the distributing device above the mould.

According to another preferred embodiment, step h) comprises of delivering the supplied polyurethane to the mould at four spatially separated positions using the discharges.

The invention will now be discussed in more detail with reference to the drawings, in which

Figure 1 shows a schematic view of a distributing device according to the invention;
Figure 2 shows a cross-section of the distributing device of figure 1; and
Figure 3 shows the distributing device in figure 1 disposed above a mould.

Corresponding components are designated in the figures with the same reference numerals.

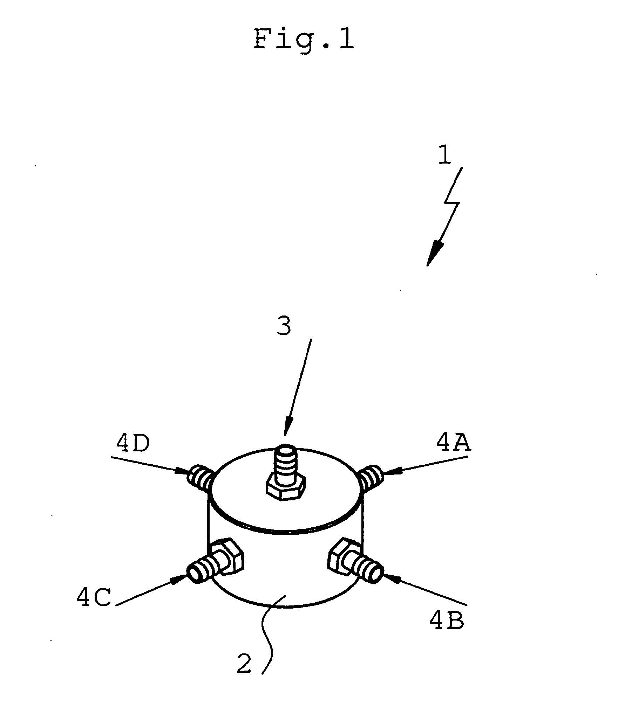

Figure 1 shows a schematic view of a distributing device 1 according to the invention. Distributing device 1 comprises a housing 2, which is provided with a feed 3 for polyurethane. Housing 2 further comprises discharges 4A, 4B, 4C, 4D for delivering polyurethane at two or more spatially separated positions. The shown preferred embodiment opts for four discharges for delivering polyurethane at four spatial positions.

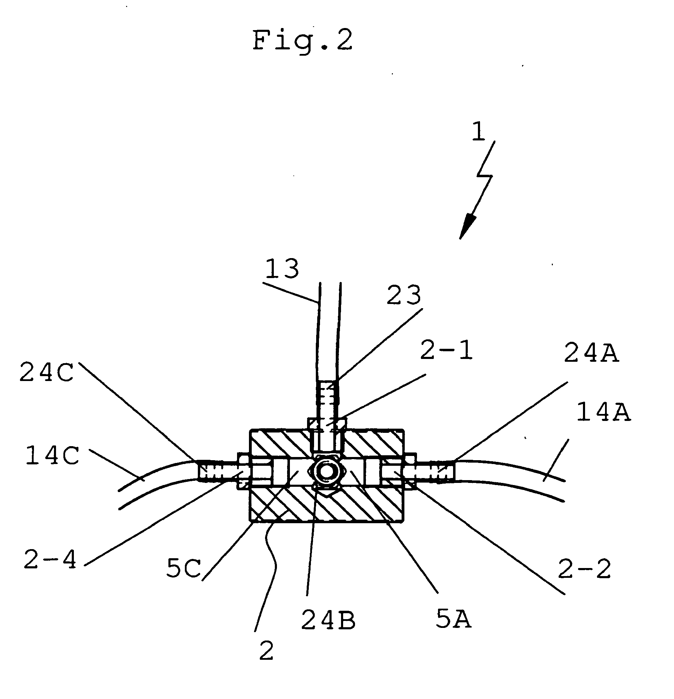

Figure 2 shows a cross-section of distributing device 1. Housing 2 is provided with discharge openings 2-2, 2-3, 2-4, 2-5 on which are arranged respective connections 24A, 24B, 24C, 24D for releasable connection to tubular delivery means 14A, 14B, 14C, 14D. The desired number of discharge openings to be used can be adjusted in each case to the intended application. Unused discharge openings can be closed in simple manner before use. Owing to the releasable connection, the distributing device is easy to clean after use. Discharges 4A, 4B, 4C, 4D are each formed by one of the connections 24A, 24B, 24C, 24D with the associated respective delivery means 14A, 14B, 14C, 14D. It is noted for the sake of completeness that only discharge openings 2-2 and 2-4 with respective connections 24A, 24C for respective tubular delivery means 14A, 14C are visible in the cross-section of figure 2. Housing 2 is further provided with a feed opening 2-1 on which is arranged a connection 23 for releasable connection of tubular feed means 13. This releasable connection also contributes toward said convenience of cleaning. Connection 23 and feed means 13 together form feed 3.

An example of suitable tubular delivery means are reinforced filling hoses, which are in practice already used in the manual filling of the mould as described in the preamble of this application. Said reinforced filling hose is an example of a suitable feed means.

Housing 2 is at least partly hollow. In the shown preferred embodiment a number of passages connecting feed opening 2-1 to each of the discharge openings 2-2, 2-3, 2-4, 2-5 are situated in housing 2. These passages form a distributor for uniform distribution among discharges 4A, 4B, 4C, 4D of the polyurethane supplied to feed 3. Only passages 5A and 5C are visible in the cross-section.

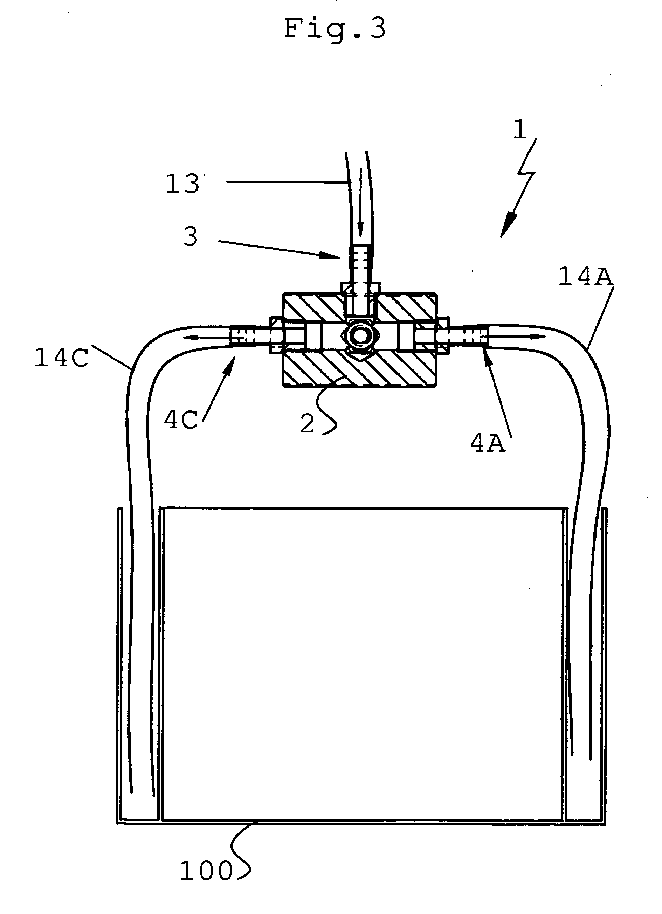

Figure 3 illustrates the operation of the distributing device according to the invention. Figure 3 shows schematically distributing device 1 disposed above a mould 100. Mould 100 can be any mould intended for the manufacture of large polyurethane products with a relatively small wall thickness. In the shown preferred embodiment the mould is intended for the manufacture of polyurethane daymarks for buoys. Daymarks for buoys must be arranged for marking purposes on buoys located in waterways. The wear-resistant properties of polyurethane are particularly advantageous here. By adding colour to polyurethane the daymarks can moreover be supplied in the prescribed colours, without further finishing treatments being necessary. The addition of colours takes place in the manner which is per se usual for polyurethane in this professional field.

The method for pouring polyurethane into a mould according to the invention comprises the following steps.

Distributing device 1 according to the invention is first disposed close to mould 100. In order to enhance filling of the mould, distributing device 1 is preferably placed higher than mould 100. In figure 3 distributing device 1 is even arranged above mould 100. Support of distributing device 1 can take place using various techniques, depending on the surrounding area of the mould and the aids available. This will not be discussed further in the context of the present invention.

The polyurethane with which mould 100 must be filled is then fed to distributing device 1. This can take place by connecting feed 3 of the distributing device to a reservoir with polyurethane (not shown).

Finally, the supplied polyurethane is distributed in distributing device 1 among discharges 4A, 4B, 4C and 4D, which are located at spatially separated positions. In the preferred embodiment the discharges comprise as delivery means four filling hoses 14A, 14B, 14C, 14D which are inserted into mould 100 at four spatially separated positions. The delivery means preferably extend approximately to the bottom of the space in the mould to be filled. Using the two or more delivery means the mould is filled with polyurethane simultaneously at the spatially separated positions The supplied polyurethane is herein delivered substantially below the liquid level of the polyurethane in the mould as soon as the liquid level is sufficiently high. This can be achieved by co-displacing the delivery means upward with the rising liquid level of the polyurethane during the delivery. The optimum position of the outer end of each of the delivery means is continuously adjusted by means of visual observation such that it is situated above the already curing polyurethane layer in the mould.

The arrows indicate the direction of flow of the polyurethane. It is noted for the sake of clarity that, as in figure 2, only two of the four discharges are visible in the shown view.

The dimensions of discharge openings 2-2 to 2-5 in the housing, connections 24A - 24D and delivery means 14A - 14D also determine the distribution of the polyurethane among the discharges. The polyurethane will in general be distributed substantially uniformly among the discharges.

The distributing device according to the invention distributes the supplied polyurethane in pressureless manner among the discharges, i.e. the distributing device does not exert any additional pressure on the polyurethane. Tests have shown that, when the combined outflow area of the discharges is greater than the inflow area of the feed, practically no air bubble formation occurs. In the shown preferred embodiment the combined outflow area of discharge openings 2-2 to 2-5 is chosen to be greater than the inflow area of feed opening 2-1. As a result the outflow speed of the polyurethane at the position of discharge openings 2-2 to 2-5 is lower than the inflow speed of the polyurethane at the position of feed opening 2-1. This follows from the equation:

$$v=q/A,$$

in which v is the speed, q the flow rate and A the area of the sectional plane. Applicant suspects that this lower outflow speed contributes to the effective prevention of the formation of air bubbles. The distributing device operates as it were as a reverse funnel. Or, in other words: a pressure drop occurs over the distributing device.

The invention is of course not limited to the shown and described preferred embodiment. It will be apparent that the method according to the invention is generally suitable for manufacturing diverse large, thin-walled products from all types of polyurethane in accordance with the appended claims. A skilled person in the field must be deemed capable of performing this method after reading of this description.

**Claims**

1. Method for pouring polyurethane into a mould, comprising the following steps of:

   a) selecting a mould suitable for manufacturing large, thin-walled products;
   b) selecting a distributing device, which distributing device comprises a housing provided with a feed for polyurethane and with two or more discharges which are adapted to deliver polyurethane at two or more spatially separated positions, wherein a number of passages are situated in the housing which connect the feed to each of the discharges and wherein the combined outflow area of the discharges is greater than the inflow area of the feed;
   c) arranging the distributing device close to the mould;
   d) providing each discharge in the distributing device with delivery means, the length of which is adjusted to the filling height of the mould;
   e) selecting the two or more spatially separated positions and placing the outer ends of the delivery means at these positions in the mould;
   f) feeding polyurethane to the distributing device;
   g) delivering the supplied polyurethane substantially below the liquid level of the polyurethane in the mould; and
   h) moving the delivery means upward during delivery of the polyurethane for delivering the supplied polyurethane with the delivery means in pressureless manner at the two or more spatially separated positions using the discharges.

2. Method as claimed in claim 1, wherein step c) comprises of disposing the distributing device above the mould.

3. Method as claimed in any of the foregoing claims, wherein step h) comprises of delivering the supplied polyurethane to the mould at four spatially separated positions using the discharges.

**Patentansprüche**

1. Verfahren zum Gießen von Polyurethan in eine Form, das die folgenden Verfahrensschritte umfaßt:

   a) Auswählen einer geeigneten Form, um breite dünnwandige Produkte herzustellen;
   b) Auswählen einer Verteilungsvorrichtung, wobei die Verteilungsvorrichtung ein Gehäuse mit einer Beschickung von Polyurethan und mit zwei oder mehr Produktausgaben, die geeignet sind, Polyurethan an zwei oder mehr räumlich getrennten Positionen auszugeben, wobei eine Anzahl von Durchlässen in dem Gehäuse angeordnet sind, die die Beschickung mit jeder der Produktausgaben verbinden und wobei der kombinierte Ausflußbereich der Produktausgaben größer ist als der Zuflußbereich der Beschickung;
   c) Anordnen der Verteilungsvorrichtung in der Nähe der Form;
   d) Versehen jeder Produktausgabe in der Verteilungsvorrichtung mit Verteilungsmitteln, wobei die Länge derselben an die Füllhöhe der Form angepaßt ist;
   e) Auswählen zweier oder mehrerer räumlich getrennter Positionen und Plazieren der äußeren Enden der Verteilungsmittel an diesen Positionen innerhalb der Form;
   f) Beschicken der Verteilungsvorrichtung mit Polyurethan;
   g) Ausgeben des Polyurethans im Wesentlichen unterhalb des Polyurethan-Flüssigkeitsniveaus in der Form; und

h) Bewegen der Verteilmittel nach oben während der Ausgabe des Polyurethans, um das Polyurethan mit den Verteilungsmitteln drucklos unter Verwendung der Produktausgaben an den zwei oder mehreren räumlich getrennten Positionen auszugeben.

2. Vorrichtung gemäß Anspruch 1, wobei Schritt c) das Anordnen der Verteilungsvorrichtung über der Form umfaßt.

3. Verfahren gemäß einem der vorhergehenden Ansprüche, wobei Schritt h) das Verteilen des Polyurethans in der Form unter Verwendung der Produktausgaben an vier räumlich getrennten Positionen umfaßt.

## Revendications

1. Procédé de coulage du polyuréthane dans un moule, comprenant les étapes suivantes :

a) choix d'un moule adapté à la fabrication de produits large à faible paroi ;
b) choix d'un dispositif de distribution, lequel dispositif de distribution comprend un carter muni d'une alimentation en polyuréthane et de deux ou plusieurs sorties aptes à délivrer du polyuréthane en deux ou plusieurs positions séparées spatialement, un certain nombre de passages étant situés dans le carter lesquels mettent en contact l'alimentation et chacune des sorties, et la section de sortie combinée des sorties étant supérieure à la section d'entrée de l'alimentation ;
c) positionnement du dispositif de distribution à proximité du moule ;
d) dotation de chaque sortie du dispositif de distribution de moyens de délivrance dont la longueur est ajustée à la hauteur de remplissage du moule ;
e) choix de deux ou plusieurs positions séparées spatialement et mise en place des extrémités extérieures des moyens de délivrance à ces positions dans le moule ;
f) alimentation en polyuréthane du dispositif de distribution ;
g) délivrance du polyuréthane alimenté essentiellement en dessous du niveau de liquide du polyuréthane présent dans le moule ; et
h) déplacement des moyens de délivrance vers le haut durant la délivrance du polyuréthane en vue de délivrer sans pression le polyuréthane alimenté avec les moyens de délivrance aux deux ou plusieurs positions séparées spatialement en utilisant les sorties.

2. Procédé selon la revendication 1, dans lequel l'étape c) comprend la mise en place du dispositif de distribution au-dessus du moule.

3. Procédé selon l'une des revendications précédentes, dans lequel l'étape h) comprend la délivrance du polyuréthane alimenté dans le moule à quatre positions séparées spatialement en utilisant les sorties.

# Fig.1

# Fig.2

# Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4356617 A
- US 3875893 A

- EP 0030827 A1